# EUROPÄISCHE PATENTSCHRIFT

(11) **EP 3 881 735 B1**
(45) Veröffentlichungstag und Bekanntmachung des Hinweises auf die Patenterteilung: **02.09.2026**
(21) Anmeldenummer: 21162213.9
(22) Anmeldetag: 12.03.2021
(51) Int. Cl.: A47J 37/06, A47J 37/07

(54) **GRILLGERÄT**
GRILL DEVICE
GRIL

(30) Priorität: 16.03.2020 DE 202020101426 U
(43) Veröffentlichungstag der Anmeldung: 22.09.2021
(60) Teilanmeldung: 23168420.0 / 4 218 511
(73) Patentinhaber: Enders Colsman AG, 58791 Werdohl (DE)
(72) Erfinder: GLOGER, Michael, 58791 Werdohl (DE); COLSMAN, Robin, 44139 Dortmund (DE)
(74) Vertreter: Haverkamp Patentanwälte PartG mbB

(56) Entgegenhaltungen:
- EP-A1- 2 965 673
- WO-A2-2014/012062
- AT-B- 374 673
- DE-A1- 102017 220 645
- DE-U1- 202016 106 109
- DE-U1- 202019 104 770
- DE-U1- 7 735 481
- KR-B1- 102 078 237
- US-A1- 2010 206 180
- US-A1- 2016 037 967

## Beschreibung

Gegenstand der Erfindung ist ein Grillgerät mit einer Grillfläche zum Auflegen von zu garenden Lebensmitteln, mit einer unterhalb der Grillfläche befindlichen Wärmequelle zum Erwärmen eines auf der Grillfläche befindlichen Lebensmittels und mit einer zweiten, oberhalb der Grillfläche befindlichen, als IR-Strahler ausgeführten Wärmequelle.

Derartige Grillgeräte sind beispielsweise als Gasgrillgeräte ausgeführt. Bei einem derartigen Grillgerät befindet sich unterhalb der Grillfläche ein Brenner als Wärmequelle zum Erwärmen von auf der Grillfläche befindlichen Lebensmitteln. Die Grillfläche selbst ist typischerweise als Rost ausgeführt. Mit derartigen Grillgeräten, deren Wärmequelle durchaus auch eine elektrische Wärmequelle oder eine durch Verbrennen von Kohle bereitgestellte Wärmequelle sein kann, wird das auf der Grillfläche befindliche Gut gegrillt. Bei Gasgrillgeräten handelt es sich typischerweise um Brennerrohre, die unterhalb der Grillfläche angeordnet sind.

Mitunter besteht bei derartigen Grillgeräten auch die Möglichkeit, an den beiden einander gegenüberliegenden Querseitenwänden einen typischerweise elektromotorisch angetriebenen Drehspieß zu befestigen. Bei einer solchen Verwendung des Gasgrillgerätes wird man unterhalb des an dem Drehspieß befindlichen Lebensmittels eine Auffangschale oder eine Auffangwanne zum Auffangen von Garflüssigkeiten positionieren. Herabtropfende Flüssigkeiten sollen das oder die unterhalb der Garfläche befindlichen Brennerrohre nicht verunreinigen. Aus diesem Grunde ist eine Erwärmung eines an einem Drehspieß befindlichen Lebensmittels mit den üblichen, unterhalb des Rostes befindlichen Brennerrohren nicht möglich. Bei einer solchen Gasgrillausgestaltung verfügt dieser über einen Rückenbrenner, oftmals auch als Backburner angesprochen. Dieser Rückenbrenner ist an die Rückwand eines den Garraum einfassenden Gehäuses angeschlossen und damit seitlich bezüglich des Garraumes positioniert. Damit befindet sich der Rückenbrenner seitlich in Bezug auf einen Drehspieß, sodass die dem Lebensmittel zugeführte Wärme von der Rückseite der Grillkammer aus her zugeführt wird und damit aus einer anderen Richtung als von unten. Mit einem solchen Rückenbrenner können an einem Drehspieß gehaltene Lebensmittel gegart werden, ohne dass Flüssigkeiten auf den Rückenbrenner herabtropfen können. Aufgrund der unterhalb des Drehspießes positionierten Auffangschale oder Auffangwanne können auch die unterhalb eines Rostes befindlichen Brennerrohre nicht verschmutzen.

Ein solches Grillgerät ist aus DE 20 2019 104 770 U1 bekannt. Bei diesem vorbekanntem Grillgerät, welches als Gasgrillgerät ausgeführt ist, ist die zweite Wärmequelle als gasbetriebene Wärmequelle konzipiert, bei dem die aus einem Brennerrohr austretenden Flammen bei einem Betrieb der zweiten Wärmeeinheit einen Rotglühkörper mit einer flächigen Erstreckung beaufschlagen, der mit zumindest einem Abschnitt in seiner vertikalen Erstreckung seiner Oberfläche so angeordnet ist, dass diese Oberfläche bei einem Betrieb des Brennerrohrs von den von diesem erzeugten Flammen beaufschlagt oder zumindest von den aufsteigenden heißen Abgasen angeströmt ist. Bei diesem vorbekannten Gasgrillgerät ist ein ortsfestes Brennerrohr vorgesehen. Der Rotglühkörper kann bezüglich der Abstrahlrichtung der Wärme in gewissen engen Grenzen beeinflusst werden. Die in diesem Stand der Technik beschriebene zweite Wärmequelle wird eingesetzt, wenn mit dem Grillgerät ein Drehspieß gegart werden soll.

Die Verstellbarkeit des Rotglühkörpers ist jedoch beschränkt, da dieser zu seinem Betrieb an seiner zur Grillfläche weisenden Oberfläche von den Flammen des Brennerrohrs beaufschlagt oder zumindest von den austretenden heißen Abgasen angeströmt sein muss.

Ein weiteres Grillgerät, welches neben einer unterhalb der Grillfläche angeordneten Wärmequelle über eine zweite Wärmequelle verfügt, ist aus DE 10 2017 220 645 A1 bekannt. Auch dieses Grillgerät kann als Gasgrillgerät ausgeführt sein. Die zweite Wärmequelle dient als Oberhitze-Wärmequelle und ist als Hochtemperatur-Wärmequelle ausgeführt. Mit dieser soll die Funktion eines sogenannten "Beefers", das heißt: Das Grillen eines Steaks von oben mit hoher Temperatur einnehmen. Die Oberhitze-Wärmequelle befindet sich an einem Arm, mit dem diese verschwenkt werden kann, um den Abstand zu dem mit Oberhitze zu garendem Lebensmittel einstellen zu können. Auf Grund des die Oberhitze-Wärmequelle haltenden Arms befindet sich diese in Abhängigkeit von ihrer Höheneinrichtung oberhalb unterschiedlicher Bereiche der Grillfläche.

Aus AT 374 673 B, EP 2 965 673 A1, US 2016/037967 A1, WO 2014/012062 A2 und US 2010/206180 A1 sind elektrische Kontaktgrillgeräte bekannt. Derartige Kontaktgrillgeräte zeichnen sich dadurch aus, dass diese eine erste elektrisch beheizte Grillplatte aufweisen. Diese Grillfläche hat eine horizontale Erstreckung. Ein zu garendes Lebensmittel wird auf diese aufgelegt. Die zweite Wärmequelle ist gleichermaßen konzipiert, wobei diese Grillfläche zum Garen des Lebensmittels oberseitig auf dieses aufgelegt wird. Zu diesem Zweck ist die zweite Wärmequelle gegenüber der unteren Wärmequelle in ihrer Höhe verstellbar und um eine horizontale Achse verschwenkbar, damit diese Wärmequelle mit ihrer Grillfläche an die Kontur des zu garenden Lebensmittels angelegt werden kann. Ein kontaktloses Erwärmen eines Lebensmittels mit der zweiten Wärmequelle ist bei diesen vorbekannten elektrischen Kontaktgrillgeräten nicht vorgesehen. Grund hierfür ist, dass die der zweiten Wärmequelle zugeordnete Grillfläche für diesen Zweck nicht auf die erforderliche Temperatur gebracht werden kann, damit diese Grillfläche als IR-Strahler mit entsprechender Heizleistung erwärmt werden kann. Aus diesem Grunde werden bei Kontaktgrillgeräten die zu garenden Lebensmittel durch den erforderlichen Kontakt an der Grillfläche der jeweiligen Wärmequelle kontaktiert. Daher dient bei Kontaktgrillgeräten die Einstellbarkeit der zweiten Wärmequelle mit ihrer Grillfläche allein dem Zweck, diese zweite Wärmequelle an die Form des auf der Grillfläche der ersten Wärmequelle aufliegenden Lebensmittels anzupassen.

Ein weiteres Grillgerät der vorstehend genannten Art ist aus DE 77 35 481 U1 bekannt.

Aus KR 102 078 237 B1 ist ein zusammenfaltbares Kochgerät bekannt. Dieses Kochgerät umfasst eine als Induktionsheizstelle ausgelegte untere Wärmequelle und eine mittels eines Tragarms daran angeschlossene obere Wärmequelle. Diese ist als Infrarotwärmestrahler ausgeführt. Die obere Wärmequelle dient zum Erwärmen eines Lebensmittels von oben. Die obere Wärmequelle kann um eine horizontale Schwenkachse aus ihrer Benutzungsstellung aufgeschwenkt werden. Dieses soll einem Benutzer ermöglichen, die obere Wärmequelle aufzuschwenken, damit man Einblick in das auf der Induktionsheizstelle befindliche Kochgefäß mit dem oder den darin zu garenden Lebensmitteln zum Überprüfen des Garzustandes in einfacher Weise erhalten kann. Das Aufschwenken der oberen Wärmequelle kann ausgelegt sein, damit im Zuge des Aufschwenkvorganges die Stromversorgung unterbrochen wird. Gemäß einer anderen Ausgestaltung kann vorgesehen sein, dass die obere Wärmequelle auch in ihrer aufgeschwenkten Stellung in Betrieb bleibt. Beim erneuten Herabschwenken wird sodann auf das Lebensmittel unmittelbar Wärme abgegeben, ohne einen ansonsten erforderlichen erneuten Aufwärmvorgang abwarten zu müssen. Ausgehend von dem vorstehend diskutierten Stand der Technik liegt der Erfindung die Aufgabe zu Grunde, ein Grillgerät vorzuschlagen, dessen zweite Wärmequelle einen variableren Einsatz gestattet.

Gelöst wird diese Aufgabe erfindungsgemäß durch ein eingangs genanntes, gattungsgemäßes Grillgerät mit den weiteren Merkmalen des Anspruchs 1.

Bei diesem Grillgerät ist die zweite Wärmequelle derart verstellbar, dass diese ein auf der Grillfläche befindliches Lebensmittel von der Seite und/oder von oben oder auch in Stellungen zwischen diesen beiden Stellungen erwärmen kann. Typischerweise ist eine Stellung der zweiten Wärmequelle vorgesehen, bei der diese ein Lebensmittel von der Seite oder von oben erwärmen kann. Durchaus möglich ist es auch, die zweite Wärmequelle in einer Zwischenstellung zu fixieren, so dass ein Lebensmittel von schräg oben erwärmt wird. Bei einer solchen Stellung wird sowohl eine Seite des Lebensmittels als auch dessen Oberseite erwärmt. Ein seitliches Erwärmen kann beispielsweise vorgesehen sein, wenn ein Lebensmittel auf der Grillfläche aufliegt und alleinig oder zusätzlich zu einer Erwärmung von unten seitlich erwärmt werden soll, oder wenn oberhalb der Grillfläche ein Drehspieß angeordnet ist. Dann wird man die zweite Wärmequelle typischerweise in einer etwas angehobenen Stellung fixieren. Da dieses Grillgerät auch eine Wärmequelle unterhalb der Grillfläche aufweist, kann ein auf oder oberhalb der Grillfläche befindliches Lebensmittel gleichzeitig sowohl von unten als auch von einer Seite oder auch gleichzeitig von oben her erwärmt werden. Selbstverständlich kann ein Lebensmittel auch nur mit der zweiten Wärmequelle erwärmt werden. In einem Ausführungsbeispiel ist vorgesehen, dass die zweite Wärmequelle auch als Hochtemperatur-Wärmequelle betreibbar ist und somit der zweiten Wärmequelle, wenn in ihrer Position befindlich, ein Lebensmittel von oben zu erwärmen, als sogenannter "Beefer" eingesetzt werden kann. Ist die zweite Wärmequelle als "Beefer" vorgesehen, ist es zweckmäßig, wenn die Höheneinrichtbarkeit derselben gegenüber der Grillfläche stufenlos oder in mehreren Stufen festlegbar ist, um auf diese Weise den Abstand der zweiten Wärmequelle mit ihrer wärmeabgebenden Seite zu dem Lebensmittel einrichten zu können. Typischerweise wird die zweite Wärmequelle in ihrer Funktion "Beefer" in einem nur sehr geringen Abstand zu dem zu garenden Lebensmittel angeordnet. Die zweite Wärmequelle braucht jedoch nicht notwendigerweise als Hochtemperatur-Wärmequelle ausgebildet zu sein. Falls die zweite Wärmequelle als Hochtemperatur-Wärmequelle ausgebildet ist, kann diese auch mit einer geringeren Betriebstemperatur betrieben werden, wenn diese nicht als "Beefer" eingesetzt werden soll.

Für die Verstellbarkeit der zweiten Wärmequelle ist diese höhenverstellbar gegenüber einer sich über die Oberseite der Grillfläche hinaus erstreckenden Rückwand gehalten. Die Verstellung der zweiten Wärmequelle in vertikaler Richtung erfolgt über eine translatorische Bewegung. Damit verbleibt die zweite Wärmequelle bei diesem Grillgerät auf Grund ihrer Höhenverstellbarkeit an der Rückwand des Grillgerätes grundsätzlich in einem gleichbleibenden Abstand zu der Rückwand, und zwar unabhängig von der eingestellten Höhenposition. Daher kann die zweite Wärmequelle in ihrer abgesenkten Position ausgelegt sein, Wärme in Höhe der Grillfläche in horizontaler Richtung abzugeben. In einer mittleren oder einer angehobenen Position wird die zweite Wärmequelle in ihrer Stellung zur horizontalen Wärmeabgabe genutzt, um beispielsweise Lebensmittel an einem Drehspieß zu erwärmen. Ferner ist die zweite Wärmequelle um eine Schwenkachse verschwenkbar, durch die ihre Wärmeabstrahlrichtung eingestellt werden kann. Die Schwenkachse der zweiten Wärmequelle ist außermittig in Bezug auf diese angeordnet, und zwar versetzt zu dem unteren Abschluss der zweiten Wärmequelle hin, wenn diese sich in ihrer Stellung zur seitlichen Wärmeabgabe befindet. Damit ist die zweite Wärmequelle um diese außermittige Schwenkachse, die typischerweise im Bereich des in dieser Stellung unteren Randes der zweiten Wärmequelle angeordnet ist, verschwenkbar. Die zweite Wärmequelle ist mit ihrer Schwenkachse höhenverstellbar an der Rückwand des Grillgerätes geführt und gehalten. Eine solche Anordnung der Schwenkachse hat zum Vorteil, dass diese in unmittelbarer Nachbarschaft zur Rückwand des Grillgerätes angeordnet sein kann. Entsprechend klein ist daher der Hebelarm, mit dem das Gewicht der zweiten Wärmequelle auf die Führung und/oder Halterung derselben in bzw. an der Rückwand wirkt. Zugleich ist hierdurch Sorge dafür getragen, dass die zweite Wärmequelle in ihrer Stellung zur seitlichen Wärmeabgabe nur wenig Fläche von der Grillfläche in Anspruch nimmt. Zur Erwärmung eines Lebensmittels von oben ändert sich die Position der zweiten Wärmequelle auf Grund der Trennung ihrer Höheneinrichtbarkeit und ihrer Verschwenkbarkeit gegenüber dem wärmebestrahlten Bereich der Grillfläche nicht, abgesehen von dem Umstand, dass aus einer höheren Position der zweiten Wärmequelle mit einer Wärmeabgabe nach unten eine größere Fläche der Grillfläche wärmebestrahlt ist.

Die Trennung der Höhenverstellbarkeit der zweiten Wärmequelle von ihrer Verschwenkbarkeit begründet den besonders variablen Einsatz der zweiten Wärmequelle schlichtweg dadurch, dass diese in verschiedenste Stellungen zur Wärmeabgabe in unterschiedliche Richtungen gebracht werden kann, ohne dass hierfür raumgreifende Verstellmechanismen benötigt werden.

Eine Höhenverstellbarkeit der zweiten Wärmequelle gegenüber der Rückwand lässt sich in einfacher Weise beispielsweise durch langlochartige Führungen realisieren, die, um die Tiefe der zweiten Wärmequelle mit deren Führung nicht unnötig groß werden zu lassen, bevorzugt benachbart zu den seitlichen Abschlüssen der zweiten Wärmeeinheit angeordnet sind. In diesen Führungen können Stellarme geführt sein, die mit einem Abschnitt die Führung durchgreifen und an ihrem von der Innenseite der Rückwand in Richtung zur Grillfläche abragenden Ende die Mittel zum Verschwenken der zweiten Wärmequelle tragen. Hierbei kann es sich beispielsweise um eine Stange oder ein Rohrstück handeln, um die die zweite Wärmequelle verschwenkbar ist. Der Durchgriff der Stellarme durch die Rückwand hindurch hat zugleich den Vorteil, dass beispielsweise bei einer manuellen Höhenverstellbarkeit eine die Höhenverstellung vornehmende Person dieses von der Rückseite der Rückwand vornehmen kann und sie zu diesem Zweck nicht in die bei einem Betrieb des Grillgerätes heiße Zone oberhalb der Grillfläche greifen muss. Zugleich können diese langlochartigen Führungen, vor allem dann, wenn diese längsseitig und somit ihrer Längserstreckung folgend verstärkt sind, genutzt werden, um die Stellarme daran zu verklemmen. Eine Höhenverstellbarkeit kann ebenso wie eine Verschwenkbarkeit der zweiten Wärmequelle auch elektromotorisch erfolgen, typischerweise unter Zwischenschaltung eines selbsthemmenden Getriebes. Dann sind weitere Fixiermittel für die Fixierung der jeweils eingerichteten Höhen- und Schwenkstellung grundsätzlich nicht erforderlich.

In einem Ausführungsbeispiel wird die außermittige Anordnung der Schwenkachse der zweiten Wärmequelle genutzt, damit die zweite Wärmequelle allein durch Anschläge in ihren beiden Endstellungen in einer stabilen Lage gehalten ist. Für die Stellung der zweiten Wärmequelle in einer Ausrichtung zur horizontalen Wärmeabgabe kann dieses beispielsweise durch eine Stellung derselben erfolgen, die als Übertotpunktstellung angesprochen werden kann. Hierzu ist es allein erforderlich, dass die zweite Wärmequelle in dieser Übertotpunktstellung an einem Anschlag abgestützt ist, beispielsweise an der Innenseite der Rückwand. Auch die andere Einstellung kann anschlagbegrenzt sein. Beispielsweise durch einen Stützfortsatz, der gegen die Innenseite der Rückwand wirkt, wenn sich die zweite Wärmequelle in ihrer für eine vertikale Wärmeabgabe vorgesehenen Stellung befindet

Die zweite Wärmequelle ist vorzugsweise eine zumindest auch als Hochtemperatur-Wärmequelle ausgelegte Wärmequelle. Die zweite Wärmequelle ist als IR-Strahler ausgeführt. Ein solcher IR-Strahler kann Gas betrieben sein, was sich vor allem dann anbietet, wenn auch die unterhalb der Grillfläche befindliche Wärmequelle eine Brenngas betriebene Wärmequelle ist. In einem solchen Fall kann ein das Brenngas an die zweite Wärmequelle zuführende Rohrstück zugleich die Schwenkachse an der einen Seite der zweiten Wärmequelle darstellen, wobei das Rohrstück ortsfest verbleibt, während die zweite Wärmequelle um dieses Rohrstück als feststehende Schwenkachse verschwenkbar ist. Bei der zweiten Wärmequelle kann es sich auch um eine elektrisch betriebene Wärmequelle handeln. Eine Auslegung der zweiten Wärmequelle als elektrisch betrieber IR-Strahler kann auch vorgesehen sein, wenn die erste Wärmequelle, die für eine Erwärmung von auf der Grillfläche befindlichen Lebensmittel von unten vorgesehen ist, gasbetrieben ist.

Von besonderem Vorteil eines solchen Grillgerätes ist zudem, dass sich die zweite Wärmequelle vor allem in Bezug auf Ihre Anbindung an die übrigen Bestandteile des Grillgerätes mit einfachen Mitteln und kostengünstig realisieren lässt.

In einer Ausgestaltung eines solchen Grillgerätes ist vorgesehen, dass die zweite Wärmequelle über die Führungen bzw. die Führungsschlitze in der Rückwand durchgreifende Stellarme verfügt, die in rückseitig bezüglich der Rückwand angeordneten Führungen geführt sind. Des Weiteren ist die zweite Wärmequelle gewichtskompensiert aufgehängt bzw. gehalten, sodass für eine Höheneinrichtbarkeit der zweiten Wärmequelle nur ein geringes Kraftmoment aufgewendet werden muss. Insofern wirkt auf die Stellarme bei einer solchen Auslegung des Grillgerätes eine gewichtskompensierende Gegenkraft. Gehalten bzw. fixiert ist die zweite Wärmequelle in ihrer gewünschten Höheneinrichtung durch ein Haltemittel, bei dem es sich durchaus um die Systemreibung der für die Verstellung des zweiten Wärmestrahlers verwendeten Komponenten handeln kann. Mit einer solchen gewichtskompensierenden Gegenkraft lässt sich der zweite Wärmestrahler mit geringer Kraft verstellen, selbst wenn zwischen einem Aktor, beispielsweise einem manuell betätigbaren Bedienelement, und der tatsächlichen Verstellbewegung der zweiten Wärmequelle eine mechanische Übersetzung vorgesehen ist.

Eine solche Gegenkraft kann durch ein oder mehrere Federelemente bereitgestellt werden. Vorzugsweise wird zumindest eine Spiralfeder zum Bereitstellen der Gegenkraft genutzt, da diese über ihre Verstellbarkeit eine gleichbleibende bzw. annähernd gleichbleibende Federkraft bereitstellt.

Eine Kraftübertragung von einer solchen Spiralfeder an die Stellarme der zweiten Wärmequelle erfolgt beispielsweise über Seile, etwa Bowdenzüge oder dergleichen. Eine solche Spiralfeder sitzt gemäß einem Ausführungsbeispiel in einem als Seilrolle ausgeführten Federgehäuse und ist darin vorgespannt. Damit ist im Rahmen des vertikalen Verstellbetrages der zweiten Wärmequelle unabhängig von der Höheneinstellung derselben von dieser eine weitgehend gleiche Gegenkraft bereitgestellt. An die Seilrolle sind Seile angeschlossen, um eine Drehbewegung der Seilrolle auf die Stellarme zu ihrer vertikalen Verstellbarkeit übertragen zu können. Geführt sind diese typischerweise über Umlenkrollen. Um eine klemmfreie Seilführung zu gewährleisten, sind in die äußere Mantelfläche der Seilrolle Seilführungsnuten eingebracht. Diese verlaufen spiralförmig um die Drehachse der Seilrolle, wenn eine Verstellung der Seilrolle um mehr als 360° je angeschlossenem Seil vorgesehen sein sollte.

Diese Ausgestaltung eines Grillgerätes erlaubt es, dass zur Höhenverstellbarkeit der zweiten Wärmequelle trotz ihres Gewichtes ein manuell betätigbares Bedienelement, selbst ein solches, dass als Drehknopf ausgelegt ist, verwendet werden kann. Ein derartiger Drehknopf ist typischerweise an der Bedienseite des Grillgerätes zusammen mit den übrigen Bedienelementen angeordnet. Von einem solchen manuell betätigbaren Bedienelement ist die damit ausgeführte Drehbewegung beispielsweise über einen Bowdenzug an die Seilrolle übertragen. Bei einem solchen Ausführungsbeispiel erfolgt der Antrieb der Seilrolle zum Verstellen der zweiten Wärmequelle über eine Betätigung des Bedienelementes.

Durchaus möglich ist auch eine Ausgestaltung eines Grillgerätes, wie vorstehend beschrieben, dass zusätzlich zu der Seilrolle mit ihrer Spiralfeder eine weitere Spiralfeder als Teil des manuell betätigbaren Bedienelementes vorgesehen ist, wenn beispielsweise höhere Gewichte der zweiten Wärmequelle zu kompensieren sind.

In derselben Weise kann auch die Verschwenkbarkeit der zweiten Wärmequelle konzipiert sein, und zwar dass auf diese ein stellkraftreduzierendes Kraftmoment wirkt. Auch dieses kann durch eine oder mehrere Spiralfedern für die Gewichtskompensation gelöst sein. Eine solche Spiralfeder kann Teil des manuell betätigbaren Bedienelementes sein. Auch in Bezug auf eine Verschwenkbarkeit der zweiten Wärmequelle ist in einem Ausführungsbeispiel vorgesehen, die Stellkraft auf die zweite Wärmequelle mittels zumindest eines Seils, typischerweise eines Bowdenzuges, zu übertragen.

Die gewichtskompensierte Aufhängung der zweiten Wärmequelle in Bezug auf ihre Höheneinrichtbarkeit und/oder die Einwirkung eines stellkraftreduzierenden Kraftmomentes auf die Verschwenkbarkeit der zweiten Wärmequelle hat, wenn eine manuelle Betätigung nicht vorgesehen sein sollte, ebenfalls den Vorteil, dass eine Verstellbarkeit beispielsweise auch mit einem elektrisch betriebenen Aktor, typischerweise einem Elektromotor, möglich ist. Um die gewünschte Verstellbarkeit trotz vorhandenen Gewichtes der zweiten Wärmequelle zu erreichen, ist es dann völlig ausreichend, wenn ein leistungsschwacher und damit ein wenig Energie aufnehmender Elektromotor eingesetzt wird.

Die vorstehend beschriebene Ausgestaltung eines Grillgerätes, die nachstehend auch anhand von Figuren beschrieben ist, bei der die Höhenverstellbarkeit und/oder die Schwenkbarkeit gewichtskompensiert bzw. stellkraftreduzierend vorgesehen ist, kann auch bei Grillgeräten eingesetzt werden, bei denen die zweite Wärmequelle nicht in der konkret beanspruchten Ausgestaltung verstellbar ist oder wenn innerhalb des Garraumes ein anderer Bestandteil des Grillgerätes verstellt werden soll.

Nachfolgend ist die Erfindung anhand eines Ausführungsbeispiels unter Bezugnahme auf die beigefügten Figuren beschrieben. Es zeigen:
- **Fig. 1:**: Ein Gasgrillgerät in einer perspektivischen Ansicht mit abgenommener Haube,
- **Fig. 2:**: einen Querschnitt durch die Rückwand des Gasgrillgerätes der Figur 1 entlang der in Figur 1 angedeuteten Schnittlinie A mit einer an der Rückwand gehaltenen zweiten Wärmequelle in einer ersten Stellung,
- **Fig. 3:**: einen Querschnitt durch die Rückwand des Gasgrillgerätes der Figur 1 entlang der in Figur 1 angedeuteten Schnittlinie A mit einer an der Rückwand gehaltenen zweiten Wärmequelle in einer weiteren Stellung,
- **Fig. 4:**: eine perspektivische Teilansicht von Teilen eines weiteren Grillgerätes, dargestellt lediglich mit einem Ausschnitt seiner Rückwand und einer vor dieser befindlichen zweiten Wärmequelle sowie mit einem Ausschnitt seines Bedienpaneels,
- **Fig. 5:**: eine Rückseitenansicht zum Darstellen der Aufhängung der zweiten Wärmequelle an der Rückwand,
- **Fig. 6:**: eine Ausschnittsdarstellung auf die Aufhängung der zweiten Wärmequelle,
- **Fig. 7:**: eine perspektivische Detaildarstellung auf den in Figur 4 gezeigten linken Randabschnitt der zweiten Wärmequelle zum Darstellen einer Aktorik für ihre Verschwenkbarkeit und
- **Fig. 8:**: eine perspektivische Rückseitenansicht des Ausschnittes des Bedienpaneels der Figur 4 mit zwei manuell betätigbaren Bedienelementen, vorgesehen für die Höheneinrichtbarkeit und die Verschwenkbarkeit der zweiten Wärmequelle.

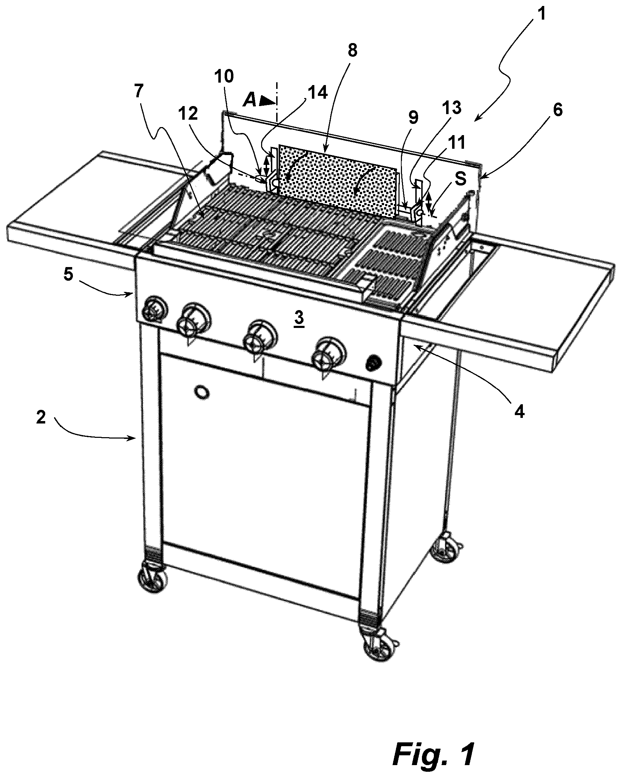

In dem in den Figuren 1 bis 3 dargestellten Ausführungsbeispiel ist ein Gasgrillgerät 1 beschrieben, das sich auf einem fahrbaren Unterbau 2 befindet. Eingefasst durch eine Vorderwand 3, zwei Seitenwände 4, 5 und eine Rückwand 6 ist eine Brennerkammer, in der mehrere Brennerrohre angeordnet sind. Die Brennergasversorgung der Brennerrohre befindet sich innerhalb des Unterbaus 2. Die Brennerkammer, in der sich die Brennerrohre befinden, ist oberseitig durch eine Grillfläche 7, die bei dem dargestellten Ausführungsbeispiel als Rost ausgeführt ist, begrenzt. Bei dem dargestellten Ausführungsbeispiel handelt es sich bei der Grillfläche 7 um eine Kombination aus einem offenen Rost und einem geschlossenen Rost (rechter Teil der Grillfläche). Bei dem geschlossenen Rost handelt es sich somit um eine Grillplatte. Die Grillfläche 7 dient zum Garen von darauf befindlichen Lebensmitteln mit einer Wärmezufuhr von unten, wenn eines oder mehrere der Brennerrohre, die sich unterhalb der Grillfläche 7 befinden, im Betrieb sind.

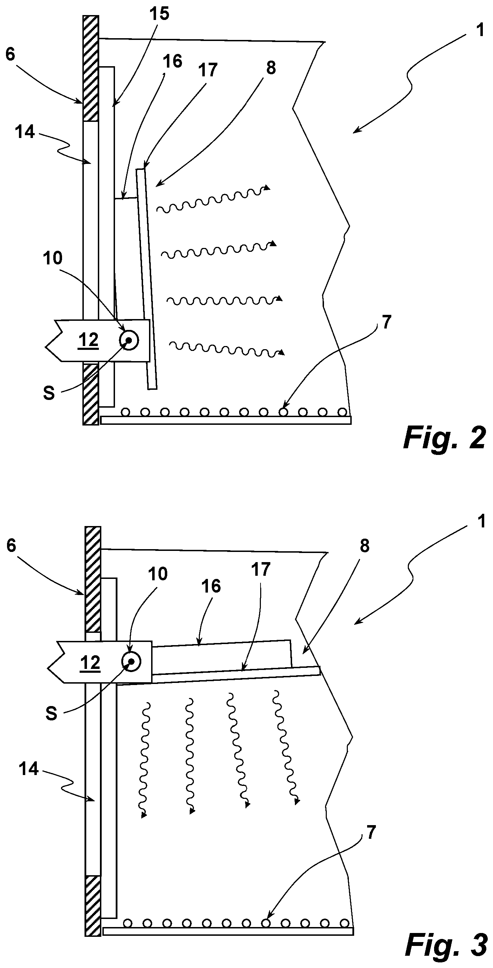

Das Gasgrillgerät 1 verfügt neben der unterhalb der Grillfläche 7 befindlichen Wärmequelle, bereitgestellt durch die genannten Brennerrohre, über eine zweite Wärmequelle 8. Auch bei der zweiten Wärmequelle 8 handelt es sich um eine Gas betriebene Wärmequelle. Ausgebildet ist diese als IR-Strahler, bei der durch das Brenngas bei dem dargestellten Ausführungsbeispiel ein Metallgestrick in einen rotglühenden Zustand bei entsprechender Befeuerung gebracht wird. In Figur 1 befindet sich die zweite Wärmequelle 8 in einer annähernd parallel zur Rückwand 6 verlaufenden Stellung. Ihre Wärmeabgabeseite ist in dieser Stellung ausgerichtet, Wärme in horizontaler Richtung abzugeben. In dieser Stellung kann die zweite Wärmequelle 8 als Backburner genutzt werden. Erwärmt werden kann hiermit ein auf der Grillfläche 7 befindliches Lebensmittel von der Seite. Genauso gut kann die zweite Wärmequelle 8 in dieser Stellung genutzt werden, um einen an dem Gasgrillgerät 1 gehaltenen Drehspieß von der Seite her zu erwärmen, während unterhalb des an dem Drehspieß gehaltenen Lebensmittels eine Auffangwanne positioniert ist, um herabtropfende Garflüssigkeit aufzufangen. Die Schwenkachse S der zweiten Wärmequelle 8 wird durch zwei Schwenkachsenstücke 9, 10 bereitgestellt. Die Schwenkachsenstücke 9, 10 und damit die Schwenkachse S, um die die zweite Wärmequelle 8 schwenkbar ist, befindet sich im Bereich des unteren Abschlusses dieser Wärmequelle 8 in ihrer in Figur 1 gezeigten Stellung. Die zweite Wärmequelle 8 kann, wie durch die Pfeile in Figur 1 angedeutet, aus ihrer in Figur 1 gezeigten Stellung mit ihrer Wärmeabgabeseite in Richtung zur Grillfläche 7 hin verschwenkt werden (siehe Figur 3).

Die Schwenkachsenstücke 9, 10 sind in jeweils einem Stellarm 11, 12 gehalten. Die Stellarme 11, 12 durchgreifen jeweils eine langlochartige Führungsdurchbrechung 13, 14 in der Rückwand 6. In der in Figur 1 gezeigten Stellung befindet sich die zweite Wärmequelle 8 in ihrer untersten Stellung. Über die Stellarme 11, 12 ist die zweite Wärmequelle 8, wie durch die Pfeile in Figur 1 angedeutet, in Bezug auf die Grillfläche 7 höheneinrichtbar. Die Fixierung der Stellarme 11, 12 in der gewünschten Höhenposition der zweiten Wärmequelle 8 erfolgt auf bzw. an der Rückseite der Rückwand 6, beispielsweise durch Klemmmittel (in den Figuren nicht dargestellt).

Das Schwenkachsenstück 9 ist als Rohrstück ausgeführt, dessen Hohlraum sich in dem Stellarm 11 fortsetzt, der ebenfalls einen Hohlkanal aufweist. Der Stellarm 11 mit dem daran angeschlossenen Schwenkachsenstück 9 dient einer Gaszufuhr an die zweite Wärmequelle 8. An den Stellarm 11 ist hinter der Rückwand 6 ein flexibler Gasschlauch angeschlossen, durch den die Höheneinrichtbarkeit innerhalb der Führungsdurchbrechungen 13, 14 nicht beeinträchtigt ist.

Figur 2 zeigt in einer schematisierten Schnittdarstellung durch die Rückwand 6 im Bereich der Längserstreckung der Führungsdurchbrechung 14 die zweite Wärmequelle 8 in ihrer Stellung zur horizontalen Wärmeabgabe. Der Stellarm 12 durchgreift die Führungsdurchbrechung 14. Die beiden längsseitigen Ränder der Führungsdurchbrechung 14 sind jeweils durch einen Blechstreifen 15 verstärkt. Die Führungsdurchbrechung 13 weist entsprechende Verstärkungsstreifen auf. Diese dienen dem Zweck, dass der zweite Wärmestrahler 8 mit seinen Stellarmen 11, 12 an der Rückwand 6 mechanisch festgelegt werden kann. Das Fixieren des zweiten Wärmestrahlers 8 an der Rückwand 6 in Bezug auf seine gewünschte Höhenposition ist in den Figuren nicht gezeigt. Beispielsweise kann eine Klemmung verwendet werden, durch die die Rückwand 6 mit ihren einer Versteifung dienenden Blechstreifen 15 eingeklemmt ist.

Die zweite Wärmequelle 8 befindet sich in ihrer Stellung zur horizontalen Wärmeabgabe, wie aus Figur 2 ersichtlich, in einer Übertotpunktstellung. Mit ihrem rückseitigem Gehäuse 16 ist diese an der zur Grillfläche 7 weisenden Seite der Rückwand 6 abgestützt (auf Grund der Schnittline hinter dem Verstärkungsstreifen 15). Damit ist die zweite Wärmequelle 8 in dieser Stellung ohne zusätzliche Fixiermittel zum Fixieren seiner Verschwenkstellung gehalten. Bei einem Betrieb der zweiten Wärmequelle 8 emittiert diese Wärme in horizontaler Richtung, wie in Figur 2 angedeutet. Damit kann ein auf der Grillfläche 7 befindliches Lebensmittel oder ein an einem Drehspieß befindliches Lebensmittel von der Seite erwärmt (gegrillt) werden. Auf Grund der Höheneinrichtbarkeit kann die zweite Wärmequelle 8 zum Erwärmen eines an einem Drehspieß befindlichen Lebensmittels auch in eine höhere Position gebracht werden.

Figur 3 zeigt die zweite Wärmequelle 8 in einer gegenüber ihrer Stellung in Figur 2 angehobenen und verschwenkten Stellung. In dieser Stellung dient die zweite Wärmequelle 8 zum Zuführen von Wärme auf ein auf der Grillfläche 7 zu garendes Lebensmittel von oben. Verschwenkt worden ist die zweite Wärmequelle 8 um die Schwenkachse S. Da die zweite Wärmequelle 8 auch für einen Hochtemperatur-Betrieb ausgelegt ist, kann diese in der in Figur 3 gezeigten Stellung, wenn gewünscht auch als "Beefer" genutzt werden. In dieser Stellung ist die zweite Wärmequelle 8 ebenfalls an der Innenseite der Rückwand 6 abgestützt gehalten. Abgestützt ist die zweite Wärmequelle 8 mit ihrem vorder- bzw. wärmeabgabeseitig umlaufenden Rahmen 17. Ebenso wie in der vorbeschriebenen Übertotpunktstellung der zweiten Wärmequelle 8 zur Wärmeabgabe in horizontaler Richtung, in der diese nicht exakt parallel zur Rückwand 6 angeordnet ist, befindet sich die zweite Wärmequelle 8 auch in ihrer Stellung als Topburner in ihrer Wärmeabgabeseite auf Grund ihrer Abstützung an der Rückwand 6 nicht streng parallel zur Ebene der Grillfläche 7. Somit wird bei dem in den Figuren dargestellten Ausführungsbeispiel auch in dieser Stellung der zweiten Wärmequelle 8 ein zusätzliches Fixiermittel zum Halten der zweiten Wärmequelle 8 in dieser Stellung nicht benötigt. Ein solches wäre erforderlich, wenn die zweite Wärmequelle in einer Zwischenstellung zwischen den beiden in den Figuren 2 und 3 gezeigten Endstellungen gehalten werden soll. Auf Grund des Klemmmechanismuses zum Fixieren der zweiten Wärmequelle 8 in ihrer Höhe zur Grillfläche 7 ist eine Einstellung in der Höhe stufenlos möglich.

Die zweite Wärmequelle 8 kann gleichzeitig mit einem oder mit mehreren Brennerrohren unterhalb der Grillfläche 7 betrieben werden.

Das Grillgerät 1 verfügt über eine in den Figuren nicht dargestellte Haube, mit der der oberhalb der Grillfläche 7 befindliche Garraum abgedeckt werden kann. Dieses ist möglich, und zwar unabhängig von der Stellung der zweiten Wärmequelle 8.

In den nachfolgenden Figuren ist die Verstellbarkeit einer zweiten Wärmequelle 8.1 beschrieben. Gleiche Bauteile, soweit erforderlich, wie zu dem zuvor beschriebenen Ausführungsbeispiel, sind mit denselben Bezugszeichen ergänzt um einen Suffix kenntlich gemacht.

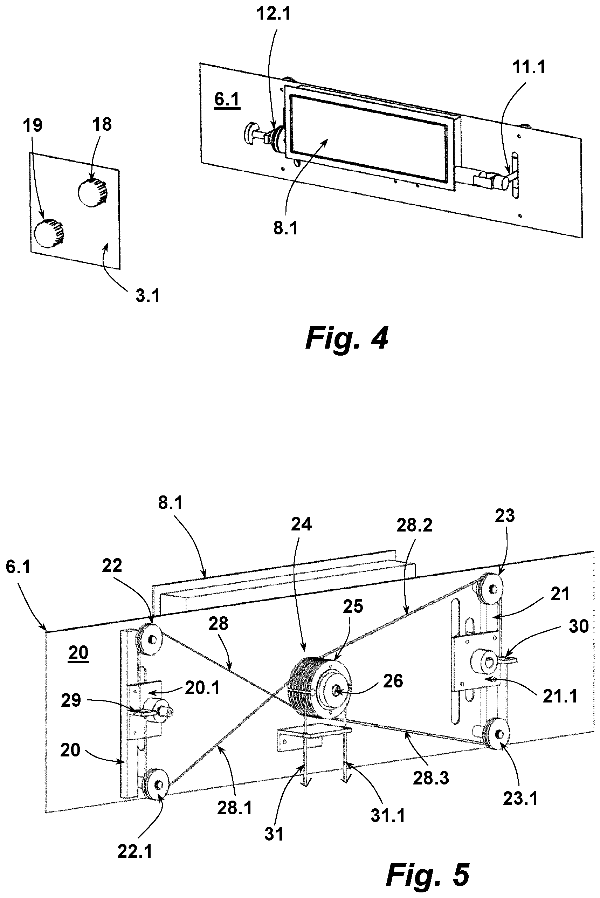

In Bezug auf die Verstellbarkeit einer zweiten Wärmequelle 8.1, die vom Prinzip her konzipiert ist wie die in dem vorangegangenen Ausführungsbeispiel beschriebene zweite Wärmequelle 8 ist in den Figuren 4 bis 8 eine Verstellbarkeit derselben anhand eines weiteren Ausführungsbeispiels erläutert. Die zweite Wärmequelle 8.1 durchgreift mit ihren beiden Stellarmen 11.1, 12.1 den in Figur 4 gezeigten Ausschnitt der Rückwand 6.1 eines im Übrigen nicht näher dargestellten Grillgerätes. Gezeigt ist des Weiteren ein Ausschnitt des Bedienpaneels der Vorderwand 3.1 dieses Grillgerätes. In diesem Teil des Bedienpaneels sind zwei Drehknöpfe 18, 19 angeordnet. Der Drehknopf 18 dient zum Höheneinrichten der zweiten Wärmequelle 8.1. Der Drehknopf 19 dient zum Verschwenken der Wärmequelle 8.1.

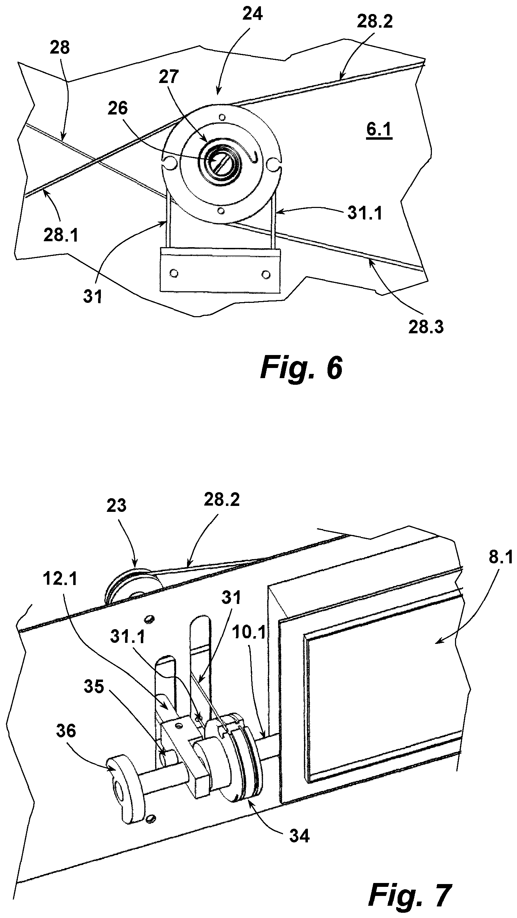

Die Wärmequelle 8.1 ist mit ihren beiden Stellarmen 11.1, 12.1 jeweils in einer auf der Rückseite 20 der Rückwand 6.1 angeordneten Führung 20, 21 translatorisch in vertikaler Richtung verstellbar geführt. Die Führungen 20, 21 sind lediglich schematisiert gezeigt. Die in die jeweilige Führungskulisse 20, 21 eingreifenden Kulissen der Stellarme 11.1, 12.1 sind jeweils an einer Führungsplatte 20.1, 21.1 gehalten. Benachbart zu den Führungsschienen 20, 21 sind an die Rückwand 6.1 jeweils zwei Umlenkrollen 22, 22.1, 23, 23.1 angeschlossen. Die jeder Führungsschiene 20 bzw. 21 zugeordneten Umlenkrollen 22, 22.1 bzw. 23, 23.1 sind in vertikaler Richtung voneinander beabstandet und befinden sich im Endbereich der jeweiligen Führungsschiene 20 bzw. 21. Die jeweilige Führungsplatte 20.1, 21.1 befindet sich zwischen den beiden Umlenkrollen 22, 22.1 bzw. 23, 23.1. Zwischen den beiden Führungsschienen 20, 21 ist an der Rückwand 6.1 eine Seilrolle 24 angebracht. Die Seilrolle 24 umfasst ein Federgehäuse 25, das um eine Achse 26 in beide Richtungen drehbar ist. Innerhalb des Federgehäuses 25 sitzt eine Spiralfeder 27 (siehe Figur 6). Diese ist innerhalb des Federgehäuses 25 gegenüber der Achse 26 vorgespannt, und zwar um bezüglich des Gewichtes der zweiten Wärmequelle 8.1 eine Gegenkraft bereitzustellen. Das Federgehäuse 25 hat in seiner äußeren Mantelfläche Seilführungsnuten. Bei dem dargestellten Ausführungsbeispiel ist in jeder Seilführungsnut ein Seil verankert. Ein erstes, mit seinem einen Ende an das Federgehäuse 25 angeschlossenes Seil 28 ist über die Umlenkrolle 22 geführt und mit seinem anderen Ende an einen an die Führungsplatte 20.1 befindlichen Mitnehmer 29 angeschlossen. Ein zweites Seil 28.1 ist in gleicher Weise an das Federgehäuse 25 der Seilrolle 24 angeschlossen und mit seinem anderen Ende ebenfalls an den Mitnehmer 29. Die beiden Seile 28, 28.1 sind in Bezug auf die Drehrichtung des Federgehäuses 25 der Seilrolle 24 gegensinnig an diese angeschlossen. Wird die Seilrolle 24 bzw. ihr Federgehäuse 25 beispielsweise im Uhrzeigersinn gedreht, wird das Seil 28 von der Seilrolle 24 entsprechend dem Drehwinkelbetrag abgewickelt, während gleichzeitig das Seil 28.1 auf die Seilrolle 24 aufgewickelt wird. Da die Seilenden der Seile 28, 28.1 formschlüssig in Zugrichtung an den Mitnehmer 29 angeschlossen sind, wird durch entsprechendes Drehen des Federgehäuses 25 die Führungsplatte 20.1 nach oben oder nach unten bewegt. Ein Rechtsdrehen des Federgehäuses 25 bewirkt ein Absenken der zweiten Wärmequelle 8.1, während eine Drehbewegung des Federgehäuses 25 in die entgegengesetzte Richtung ein Anheben derselben bewirkt.

In gleicher Weise sind zwei Seile 28.2, 28.3 sowohl an die Seilrolle 24 als auch an einen Mitnehmer 30 der Führungsplatte 21.1 angeschlossen.

Die durch die Spiralfeder 27 bereitgestellte Federkraft ist ausgelegt, damit die zweite Wärmequelle 8.1 in jeder Stellung gehalten ist. Damit ist die zweite Wärmequelle 8.1 durch die Gegenkraft der Seilrolle 24 gewichtskompensiert aufgehängt.

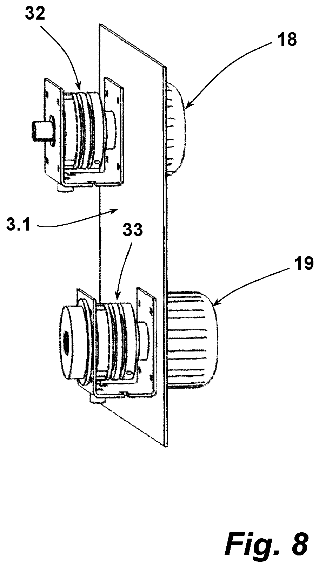

An die Seilrolle 24 sind ferner zwei Betätigungsseile 31, 31.1 angeschlossen, über die bei entsprechender Betätigung die Seilrolle 24 bzw. ihr Federgehäuse 25 in die eine oder die andere Richtung gedreht wird, und zwar entsprechend der gewünschten translatorischen Stellung der zweiten Wärmequelle 8.1 zu ihrer Höheneinrichtung. Die beiden Betätigungsseile 31, 31.1 sind an den Betätigungsknopf 18 in nicht näher dargestellter Art und Weise durch jeweils einen Bowdenzug geführt. Auf der Welle des Betätigungsknopfes 18 sitzt eine Seilrolle 32 (siehe Figur 8). Die Seilrolle 32 verfügt über zwei Seilführungsnuten, wobei in jede dieser Führungsnuten jeweils ein Betätigungsseil 31 bzw. 31.1 eingreift und an diese Seilrolle 32 angeschlossen ist. Wird der Drehknopf 18 mit der drehmomentschlüssig zu diesem angeordneten Seilrolle 32 in die eine oder die andere Richtung gedreht, wird auf eines der beiden Betätigungsseile 31, 31.1 eine Zugkraft ausgeübt, das wiederum die Seilrolle 24 in die eine oder andere Richtung dreht. Von Besonderheit ist, dass für die Verstellung der zweiten Wärmequelle 8.1 aufgrund ihrer gewichtskompensierten Aufhängung nur eine geringe Kraft aufgewendet werden muss. Dieses ist mit einem Drehknopf, wie beispielsweise anhand des Drehknopfes 18 beschrieben, ohne weiteres möglich. Als Haltemittel zum Fixieren der zweiten Wärmequelle 8.1 in der gewünschten Höhe dient bei dem beschriebenen Ausführungsbeispiel die Systemreibung, bereitgestellt durch die beschriebenen Seilführungen. Hierbei ist anzumerken, dass die Betätigungsseile 31, 31.1 als Bowdenzüge ausgelegt sind und somit zum Verstellen derselben eine gewisse Haftreibung dieser Seile 31, 31.1 mit der Innenwandung der diese umgebenden Hülle zu überwinden ist. Einfluss auf die Systemreibung hat beispielsweise auch die Auslegung der Führungen an der Rückseite 20 der Rückwand 6.1.

Die Verschwenkbarkeit der zweiten Wärmequelle 8.1 erfolgt in analoger Weise. Eine Verschwenkbarkeit der zweiten Wärmequelle 8.1 erfolgt unter Mitwirkung eines stellkraftreduzierenden Kraftmomentes. Der für die Schwenkverstellung der zweiten Wärmequelle 8.1 dienende Drehknopf 19 trägt neben einer Seilrolle 33 ebenfalls in einem Gehäuse eine Spiralfeder, sodass die Seilrolle 33 letztendlich ähnlich aufgebaut ist wie die Seilrolle 24. Die Spiralfeder ist vorgespannt, um das beim Verschwenken der zweiten Wärmequelle 8.1 anfallende Gewicht soweit wie möglich aufzufangen. Für die Ansteuerung der Verschwenkung werden ebenfalls Seile verwendet. Auf dem Schwenkachsenstück 10.1 der zweiten Wärmequelle 8.1 sitzt zu diesem Zweck eine drehmomentschlüssig mit diesem verbundene Seilrolle 34. Die beiden Betätigungsseile 31, 31.1 verbinden die beiden Seilrollen 33, 34 dergestalt, dass eine Drehbewegung des Drehknopfes 19 zu einer Verschwenkbewegung der zweiten Wärmequelle 8.1 in die eine Richtung und eine Drehbewegung des Drehknopfes 19 in die andere Richtung zu einer Verschwenkbewegung in die andere Richtung führt.

Die Verschwenkbewegung der zweiten Wärmequelle 8.1 ist durch einen Anschlag 35, der an dem Stellarm 12.1 sitzt, begrenzt. Bei dem dargestellten Ausführungsbeispiel ist der Anschlag 35 durch einen Bolzen gebildet. Dieser wirkt zusammen mit einer Anschlagscheibe 36, die drehmomentschlüssig auf dem Schwenkachsenstück 10.1 sitzt. Um den Anschlag 35 sichtbar zu machen, ist die Anschlagscheibe 36 von ihrer eigentlichen Position unmittelbar benachbart zu dem Stellarm 12.1 abgerückt gezeigt.

Die Erfindung ist anhand von Ausführungsbeispielen beschrieben worden. Ohne den Umfang der geltenden Ansprüche zu verlassen, ergeben sich für einen Fachmann zahlreiche Möglichkeiten diese umzusetzen, ohne dass dieses im Rahmen dieser Ausführungen im Einzelnen erläutert werden müsste.

**Bezugszeichenliste**

| | | | |
|---|---|---|---|
| 1 | Gasgrillgerät | 29 | Mitnehmer |
| 2 | Unterbau | 30 | Mitnehmer |
| 3, 3.1 | Vorderwand | 31, 31.1 | Betätigungsseil |
| 4 | Seitenwand | 32 | Seilrolle |
| 5 | Seitenwand | 33 | Seilrolle |
| 6 | Rückwand | 34 | Seilrolle |
| 7 | Grillfläche | 35 | Anschlag |
| 8, 8.1 | zweite Wärmequelle | 36 | Anschlagscheibe |
| 9 | Schwenkachsenstück | | |
| 10, 10.1 | Schwenkachsenstück | S | Schwenkachse |
| 11, 11.1 | Stellarm | | |
| 12, 12.1 | Stellarm | | |
| 13 | Führungsdurchbrechung | | |
| 14 | Führungsdurchbrechung | | |
| 15 | Blechstreifen | | |
| 16 | Gehäuse | | |
| 17 | Rahmen | | |
| 18 | Drehknopf | | |
| 19 | Drehknopf | | |
| 20 | Führungsschiene | | |
| 20.1 | Führungsplatte | | |
| 21 | Führungsschiene | | |
| 21.1 | Führungsplatte | | |
| 22, 22.1 | Umlenkrolle | | |
| 23, 23.1 | Umlenkrolle | | |
| 24 | Seilrolle | | |
| 25 | Federgehäuse | | |
| 26 | Achse | | |
| 27 | Spiralfeder | | |
| 28, 28.1, 28.2, 28.3 | Seil | | |

## Patentansprüche

1. Grillgerät mit einer Grillfläche (7) zum Auflegen von zu garenden Lebensmitteln, mit einer unterhalb der Grillfläche (7) befindlichen Wärmequelle zum Erwärmen eines auf der Grillfläche (7) befindlichen Lebensmittels und mit einer zweiten, oberhalb der Grillfläche (7) befindlichen, als IR-Strahler ausgeführten Wärmequelle (8, 8.1), wobei die zweite Wärmequelle (8, 8.1) dergestalt verstellbar ist, dass mit dieser ein auf der Grillfläche (7) befindliches Lebensmittel je nach Stellung der zweiten Wärmequelle (8, 8.1) von der Seite oder von oben erwärmbar ist und die zweite Wärmequelle (8, 8.1) um eine Schwenkachse (S) verschwenkbar ist, um die Richtung der gewünschten Wärmeabstrahlung zwischen einer Stellung zur Abgabe von Wärme in einer horizontalen Richtung und einer Stellung zur Abgabe von Wärme in einer vertikalen Richtung nach unten einzustellen, **dadurch gekennzeichnet, dass** die zweite Wärmequelle (8, 8.1) an einer sich über die Oberseite der Grillfläche (7) hinaus erstreckenden Rückwand (6, 6.1) des Grillgerätes (1) translatorisch höhenverstellbar gehalten ist und somit unabhängig von der eingestellten Höhenposition in einem gleichbleibenden Abstand zur Rückwand verbleibt, und dass die Schwenkachse (S) außermittig in Bezug auf die zweite Wärmequelle (8, 8.1) zu dem unteren Abschluss der zweiten Wärmequelle (8, 8.1) in ihrer Stellung zur seitlichen Wärmeabgabe hin versetzt angeordnet ist.

2. Grillgerät nach Anspruch 1, **dadurch gekennzeichnet, dass** die zweite Wärmequelle (8, 8.1) in Bezug auf ihre Verschwenkbarkeit in ihren beiden Endstellungen gegen einen Anschlag wirkt, durch den die zweite Wärmequelle (8, 8.1) jeweils in einer stabilen Lage gehalten ist.

3. Grillgerät nach Anspruch 2, **dadurch gekennzeichnet, dass** sich die zweite Wärmequelle (8, 8.1) in ihrer Stellung für eine horizontale Wärmeabgabe in Bezug auf die Schwenkachse (S) in einer Übertotpunktstellung befindet und in Richtung zur Rückwand (6, 6.1) des Grillgerätes (1) hin abgestützt ist.

4. Grillgerät nach einem der Ansprüche 1 bis 3, **dadurch gekennzeichnet, dass** die zweite Wärmequelle (8, 8.1) zum Erwärmen eines auf der Grillfläche (7) befindlichen Lebensmittels auch in Stellungen zwischen den beiden Endstellungen fixierbar ist.

5. Grillgerät nach einem der Ansprüche 1 bis 4, **dadurch gekennzeichnet, dass** die zweite Wärmequelle (8, 8.1) als Brenngas betriebener IR-Strahler ausgeführt ist.

6. Grillgerät nach Anspruch 5, **dadurch gekennzeichnet, dass** die Gaszufuhr an den verschwenkbaren IR-Strahler über ein Rohrstück erfolgt, gegenüber dem der IR-Strahler verschwenkbar ist.

7. Grillgerät nach einem der Ansprüche 1 bis 6, **dadurch gekennzeichnet, dass** zur Höhenverstellbarkeit der zweiten Wärmequelle (8, 8.1) die Rückwand (6, 6.1) zwei voneinander beabstandete, in vertikaler Richtung verlaufende Führungsdurchbrechungen (13, 14) aufweist, an die zweite Wärmequelle (8, 8.1) zwei Stellarme (11, 12; 11.1, 12.1) angeschlossen sind, die die Führungsdurchbrechungen (13, 14) durchgreifen, und Mittel zum Halten der zweiten Wärmequelle (8, 8.1) in Bezug auf ihre Höheneinrichtbarkeit aus Blickrichtung der Grillfläche (7) außerhalb des durch die Grillfläche (7) und die Rückwand (6, 6.1) eingefassten Garraumes vorgesehen sind.

8. Grillgerät nach Anspruch 7, **dadurch gekennzeichnet, dass** die Stellarme (11.1, 12.1) in jeweils eine auf der Rückseite (20) der Rückwand (6.1) angeordneten Führung (20, 21) zu ihrer vertikalen Verstellbarkeit geführt sind und auf die Stellarme (11.1, 12.1) eine bezüglich der zweiten Wärmequelle (8.1) gewichtskompensierende Gegenkraft wirkt.

9. Grillgerät nach Anspruch 8, **dadurch gekennzeichnet, dass** die zweite Wärmequelle (8.1) durch Systemreibung in ihrer Führung und/oder in der Kraftübertragung der gewichtskompensierenden Gegenkraft in der höheneingerichteten Stellung verbleibt.

10. Grillgerät nach Anspruch 8 oder 9, **dadurch gekennzeichnet, dass** die Gegenkraft durch zumindest eine Spiralfeder (27) bereitgestellt ist, deren gewichtskompensierende Kraft über Seile (28, 28.1, 28.2, 28.3) an die Stellarme (11.1, 11.2) übertragen wird.

11. Grillgerät nach Anspruch 10, **dadurch gekennzeichnet, dass** die zumindest eine Spiralfeder (27) in einem als Seilrolle (24) ausgeführten Federgehäuse (25) sitzt, an welche Seilrolle (24) die die Gegenkraft auf die Stellarme übertragenden Seile (28, 28.1, 28.2, 28.3) angeschlossen sind, dass die äußere Mantelfläche des Federgehäuses (25) Seilführungsnuten zur Führung der an die Stellarme (11.1, 11.2) angeschlossenen Seile (28, 28.1, 28.2, 28.3) aufweist und dass an die Seilrolle (24) ein Aktor zum Drehen der Seilrolle (24) zwecks Höhenverstellung des zweiten Wärmestrahlers (8.1) angeschlossen ist.

12. Grillgerät nach Anspruch 11, **dadurch gekennzeichnet, dass** der Aktor ein manuell betätigbares, an der Bedienseite des Grillgerätes angeordnetes Bedienelement (18) ist, dessen Verstellbewegung über Seile (31, 31.1) auf die Seilrolle (24) übertragen wird.

13. Grillgerät nach einem der Ansprüche 1 bis 12, **dadurch gekennzeichnet, dass** auf die zweite Wärmequelle (8.1) in Bezug auf ihre Verschwenkbarkeit ein stellkraftreduzierendes Kraftmoment wirkt.

14. Grillgerät nach Anspruch 13, **dadurch gekennzeichnet, dass** das stellkraftreduzierende Kraftmoment durch zumindest ein Federelement bereitgestellt ist, dessen Kraftmoment über zumindest ein Seil (31, 31.1) auf die zweite Wärmequelle (8.1) übertragen wird.

## Claims

1. A grill device, comprising a grill surface (7) for placing food to be cooked, with a heat source located below the grill surface (7) for heating a food located on the grill surface (7), and with a second heat source (8, 8.1) located above the grill surface (7) and designed as an IR radiator, wherein the second heat source (8, 8.1) is adjustable such that food located on the grill surface (7) can be heated from the side or from above, depending on the position of the second heat source (8, 8.1), and the second heat source (8, 8.1) is pivotable about a pivot axis (S) in order to adjust the direction of the desired heat radiation between a position for emitting heat in a horizontal direction and a position for emitting heat in a vertical downward direction, **characterized in that** the second heat source (8, 8.1) is held on a rear wall (6, 6.1) of the grill device (1) extending beyond the top of the grill surface (7) in a translationally height-adjustable manner and thus remains at a constant distance to the rear wall regardless of the set height position, and that the pivot axis (S) is arranged with an offset with respect to the second heat source (8, 8.1) relative to the lower closure of the second heat source (8, 8.1) in its position for lateral heat emission.

2. The grill device according to claim 1, **characterized in that** the second heat source (8, 8.1) acts against a stop with respect to its pivotability in its two end positions, by which stop the second heat source (8, 8.1) is held in a stable position in each case.

3. The grill device according to claim 2, **characterized in that** the second heat source (8, 8.1) in its position for horizontal heat emission is located, with respect to the pivot axis (S), in an over-dead center position and is supported in the direction of the rear wall (6, 6.1) of the grill device (1).

4. The grill device according to any one of claims 1 to 3, **characterized in that** the second heat source (8, 8.1) for heating a food located on the grill surface (7) can also be fixed in positions between the two end positions.

5. The grill device according to any one of claims 1 to 4, **characterized in that** the second heat source (8, 8.1) is designed as a fuel gas operated IR radiator.

6. The grill device according to claim 5, **characterized in that** the gas supply to the pivotable IR radiator is provided via a pipe section, relative to which the IR emitter is pivotable.

7. The grill device according to any one of claims 1 to 6, **characterized in that**, for the height adjustability of the second heat source (8, 8.1), the rear wall (6, 6.1) has two spaced-apart guide openings (13, 14) extending in the vertical direction, two adjusting arms (11, 12; 11.1, 12.1) are connected to the second heat source (8, 8.1) which extend through the guide openings (13, 14), and means for holding the second heat source (8, 8.1) with respect to its height adjustability, from the viewpoint of the grill surface (7), are provided outside the cooking space enclosed by the grill surface (7) and the rear wall (6, 6.1).

8. The grill device according to claim 7, **characterized in that** the adjusting arms (11.1, 12.1) are guided in a respective guide (20, 21) arranged on the rear side (20) of the rear wall (6.1) for their vertical adjustability and a counterforce compensating for the weight with respect to the second heat source (8.1) acts on the adjusting arms (11.1, 12.1).

9. The grill device according to claim 8, **characterized in that** the second heat source (8.1) remains in the height-adjusted position by means of system friction in its guide and/or in the force transmission of the weight-compensating counterforce.

10. The grill device according to claim 8 or 9, **characterized in that** the counterforce is provided by at least one spiral spring (27), the weight-compensating force of which is transmitted via ropes (28, 28.1, 28.2, 28.3) to the adjusting arms (11.1, 11.2).

11. The grill device according to claim 10, **characterized in that** the at least one spiral spring (27) is located in a spring housing (25) designed as a pulley (24), to which pulley (24) the ropes (28, 28.1, 28.2, 28.3) transmitting the counterforce to the adjusting arms are connected, **in that** the outer lateral surface of the spring housing (25) has rope guide grooves for guiding the ropes (28, 28.1, 28.2, 28.3) connected to the adjusting arms (11.1, 11.2) and **in that** an actuator for rotating the pulley (24) for adjusting the height of the second heat radiator (8.1) is connected to the pulley (24).

12. The grill device according to claim 11, **characterized in that** the actuator is a manually operable operating element (18) arranged on the operating side of the grill device, the adjustment movement of which is transmitted to the pulley (24) via ropes (31, 31.1).

13. The grill device according to any one of claims 1 to 12, **characterized in that** an adjusting force-reducing torque acts on the second heat source (8.1) with respect to its pivotability.

14. The grill device according to claim 13, **characterized in that** the force-reducing torque is provided by at least one spring element, the torque of which is transmitted to the second heat source (8.1) via at least one rope (31, 31.1).

## Revendications

1. Gril comportant une surface de gril (7) destinée à recevoir des aliments à cuire, avec une source de chaleur située sous la surface de gril (7) pour chauffer les aliments placés sur la surface de gril (7), et avec une seconde source de chaleur (8, 8.1) située au-dessus de la surface de gril (7) et conçue comme un émetteur infrarouge, dans lequel la seconde source de chaleur (8, 8.1) est réglable de telle sorte que les aliments placés sur la surface de gril (7) puissent être chauffés par le côté ou par le dessus, selon la position de la seconde source de chaleur (8, 8.1), et la seconde source de chaleur (8, 8.1) est pivotante autour d'un axe de pivotement (S) afin d'ajuster la direction du rayonnement thermique souhaité entre une position d'émission de chaleur horizontale et une position d'émission de chaleur verticale vers le bas, **caractérisé en ce que** la seconde source de chaleur (8, 8.1) est maintenue de manière à être réglable en hauteur par translation sur une paroi arrière (6, 6.1) du gril (1) s'étendant au-delà de la face supérieure de la surface de gril (7) et reste ainsi à une distance constante de la paroi arrière indépendamment de la position en hauteur réglée, et que l'axe de pivotement (S) est disposé hors centre par rapport à la seconde source de chaleur (8, 8.1) vers l'extrémité inférieure de la seconde source de chaleur (8, 8.1) dans sa position de diffusion de chaleur par le côté.

2. Gril selon la revendication 1, **caractérisé en ce que** la seconde source de chaleur (8, 8.1) agit contre une butée par rapport à sa capacité de pivotement dans ses deux positions d'extrémité, par laquelle la seconde source de chaleur (8, 8.1) est maintenue dans une position stable dans chaque cas.

3. Gril selon la revendication 2, **caractérisé en ce que** la seconde source de chaleur (8, 8.1) est en position d'émission de chaleur horizontale par rapport à l'axe de pivotement (S) dans une position de dépassement du point mort et est appuyée en direction de la paroi arrière (6, 6.1) du gril (1).

4. Gril selon l'une des revendications 1 à 3, **caractérisé en ce que** la seconde source de chaleur (8, 8.1) destinée à chauffer des aliments situés sur la surface de gril (7) peut également être fixée dans des positions intermédiaires entre les deux positions d'extrémité.

5. Gril selon l'une des revendications 1 à 4, **caractérisé en ce que** la seconde source de chaleur (8, 8.1) est conçue comme un émetteur infrarouge fonctionnant au gaz combustible.

6. Gril selon la revendication 5, **caractérisé en ce que** l'alimentation en gaz de l'émetteur infrarouge pivotant s'effectue par une section de tuyau par rapport à laquelle l'émetteur infrarouge pivote.

7. Gril selon l'une des revendications 1 à 6, **caractérisé en ce que**, pour le réglage en hauteur de la seconde source de chaleur (8, 8.1), la paroi arrière (6, 6.1) présente deux ouvertures de guidage espacées (13, 14) s'étendant verticalement, deux bras de réglage (11, 12 ; 11.1, 12.1) sont reliés à la seconde source de chaleur (8, 8.1) et traversent les ouvertures de guidage (13, 14), et les moyens de maintien de la seconde source de chaleur (8, 8.1) pour son réglage en hauteur du point de vue de la surface du gril (7) sont prévus à l'extérieur de la chambre de cuisson délimitée par la surface du gril (7) et la paroi arrière (6, 6.1).

8. Gril selon la revendication 7, **caractérisé en ce que** les bras de réglage (11.1, 12.1) sont guidés dans un guide (20, 21) disposé à l'arrière (20) de la paroi arrière (6.1) pour leur réglage vertical et une force de contrepoids compensant le poids par rapport à la seconde source de chaleur (8.1) agit sur les bras de réglage (11.1, 12.1).

9. Gril selon la revendication 8, **caractérisé en ce que** la seconde source de chaleur (8.1) reste dans la position réglée en hauteur par frottement du système dans son guidage et/ou dans la transmission de la force de la force de contrepoids compensant le poids.

10. Gril selon la revendication 8 ou 9, **caractérisé en ce que** la force de contrepoids est fournie par au moins un ressort hélicoïdal (27), dont la force de compensation de poids est transmise par des cordes (28, 28.1, 28.2, 28.3) au niveau des bras de réglage (11.1, 11.2).

11. Gril selon la revendication 10, **caractérisé en ce que** l'au moins un ressort hélicoïdal (27) est situé dans un logement de ressort (25) conçu comme une poulie (24), à laquelle poulie (24) sont reliées les cordes (28, 28.1, 28.2, 28.3) transmettant la force de contrepoids aux bras de réglage, que la surface extérieure du logement de ressort (25) présente des rainures de guidage pour guider les cordes (28, 28.1, 28.2, 28.3) reliées aux bras de réglage (11.1, 11.2) et qu'un actionneur permettant de faire tourner la poulie (24) pour régler la hauteur du second émetteur de chaleur (8.1) est connecté à la poulie (24).

12. Gril selon la revendication 11, **caractérisé en ce que** l'actionneur est un élément de commande à commande manuelle (18) disposé du côté de commande du gril, dont le mouvement de réglage est transmis à la poulie (24) par l'intermédiaire des cordes (31, 31.1).

13. Gril selon l'une des revendications 1 à 12, **caractérisé en ce qu'**un couple de réduction de force agit sur la seconde source de chaleur (8.1) par rapport à sa capacité de pivotement.

14. Gril selon la revendication 13, **caractérisé en ce que** le couple de réduction de force est fourni par au moins un élément de ressort, dont le couple est transmis à la seconde source de chaleur (8.1) via au moins une corde (31, 31.1).
